(19) Europäisches Patentamt European Patent Office Office européen des brevets

(11) **EP 4 776 373 A1**

(12) **EUROPEAN PATENT APPLICATION**
published in accordance with Art. 153(4) EPC

(43) Date of publication:
**15.07.2026 Bulletin 2026/29**

(21) Application number: **25785738.3**

(22) Date of filing: **24.01.2025**

(51) International Patent Classification (IPC):
**H01M 10/0568** (2010.01)   **H01M 10/0567** (2010.01)
**H01M 10/0525** (2010.01)   **H01M 4/136** (2010.01)

(52) Cooperative Patent Classification (CPC):
Y02E 60/10

(86) International application number:
**PCT/CN2025/074735**

(87) International publication number:
**WO 2026/102921 (21.05.2026 Gazette 2026/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.11.2024 CN 202411629583**

(71) Applicant: **Eve Power Co., Ltd.**
**Jingmen, Hubei 448000 (CN)**

(72) Inventors:
• **WEI, Haitao**
**Jingmen, Hubei 448000 (CN)**

• **CHEN, Ruoling**
**Jingmen, Hubei 448000 (CN)**
• **WANG, Kai**
**Jingmen, Hubei 448000 (CN)**
• **ZHU, Weihua**
**Jingmen, Hubei 448000 (CN)**
• **HUANG, Xin**
**Jingmen, Hubei 448000 (CN)**

(74) Representative: **Zhu, Puxing**
**Mars Universe IP**
**c/o Spaces**
**Mühldorfstraße 8**
**81671 München (DE)**

(54) **LITHIUM-ION BATTERY AND ELECTRIC DEVICE**

(57) The present disclosure provides a lithium-ion battery and an electrical device. The lithium-ion battery includes a positive electrode sheet and an electrolyte. Active material in the positive electrode sheet includes a lithium phosphate positive electrode material and a lithium cobalt nickel manganese oxide. The electrolyte includes a positive electrode film forming agent, a negative electrode film forming agent, and a lithium salt. The lithium salt includes lithium hexafluorophosphate and lithium bisfluorosulfonylimide. The lithium-ion battery satisfies a formula as follows:

$$0.1 \leq \frac{NL \times S_{alt}}{A_{dd}} \leq 0.59$$

, wherein NL is a mass ratio of the lithium cobalt nickel manganese oxide to the lithium phosphate positive electrode material, $S_{alt}$ is a value of a sum of molar concentrations of the lithium hexafluorophosphate and the lithium bisfluorosulfonylimide in the electrolyte in mol/L, and $A_{dd}$ is a mass ratio of the positive electrode film forming agent to the negative electrode film forming agent.

EP 4 776 373 A1

**Description**

The present disclosure claims the benefit of priority of Chinese Patent Application 202411629583.4, filed with China National Intellectual Property Administration on November 14, 2024, the contents of which is incorporated herein by reference in its entirety.

TECHNICAL FIELD

The present disclosure belongs to the field of lithium-ion batteries, and more particularly, to lithium-ion batteries and electrical devices.

BACKGROUND

With the increasing demand for environmental protection and energy saving, the upgrading of power battery materials has become more and more urgent. The new type of materials formed by combining ternary materials with lithium manganese iron phosphate or combining ternary materials with lithium iron phosphate will become an important development direction in the future. The advantages of such materials are mainly reflected in higher energy density than pure lithium manganese iron phosphate or pure lithium iron phosphate, and higher safety and lower cost than pure ternary materials. With the increase of the blending ratio of ternary materials, the rate performance and energy density of the battery are getting better and better.

SUMMARY

However, this arrangement has an adverse effect on the cycle performance of the battery.

The present disclosure provides a lithium-ion battery, which includes a positive electrode sheet and an electrolyte. Active material in the positive electrode sheet includes a lithium phosphate positive electrode material and a lithium cobalt nickel manganese oxide. The electrolyte includes a positive electrode film forming agent, a negative electrode film forming agent, and a lithium salt. The lithium salt includes lithium hexafluorophosphate and lithium bisfluorosulfonylimide. The lithium-ion battery satisfies a formula as follows:

$$0.1 \leq \frac{NL \times S_{alt}}{A_{dd}} \leq 0.59$$ , in which NL is a mass ratio of the lithium cobalt nickel manganese oxide to the lithium phosphate positive electrode material, $S_{alt}$ is a value of a sum of molar concentrations of the lithium hexafluorophosphate and the lithium bisfluorosulfonylimide in the electrolyte in mol/L, and $A_{dd}$ is a mass ratio of the positive electrode film forming agent to the negative electrode film forming agent.

The present disclosure also provides an electrical device, which includes the above-described lithium-ion batteries.

BENEFICIAL EFFECTS

According to the lithium-ion battery provided in the present disclosure, by controlling the relationship among the mass ratio of the lithium phosphate positive electrode material to the lithium cobalt nickel manganese oxide, the sum of molar concentrations of the lithium hexafluorophosphate and the lithium bisfluorosulfonylimide in the electrolyte, and the mass ratio of the positive electrode film forming agent to the negative electrode film forming agent in the lithium-ion battery, in a case that the ternary materials are doped in lithium manganese iron phosphate or lithium iron phosphate, according to the blending ratio of the two materials, the ratio of the positive electrode film forming agent and the negative electrode film forming agent and the ratio of high lithium salt with high heat resistance can be adjusted, thereby improving the cycle performance of the battery.

DETAILED DESCRIPTION

With the increase of the blending ratio of ternary materials in the lithium manganese iron phosphate and/or lithium iron phosphate, the rate performance and the energy density of the battery are getting better and better, but it has an adverse effect on the safety performance of the battery.

The technical solutions of the present disclosure are as follows:

According to a first aspect, embodiments of the present disclosure provide a lithium-ion battery, which includes a positive electrode sheet and an electrolyte. Active material in the positive electrode sheet includes a lithium phosphate positive electrode material and a lithium cobalt nickel manganese oxide (NCM). The electrolyte includes a positive electrode film forming agent, a negative electrode film forming agent, and a lithium salt. The lithium salt includes lithium hexafluoropho-

sphate ($LiPF_6$) and lithium bisfluorosulfonylimide (LiFSI). The lithium-ion battery satisfies a formula as follows:

$$0.1 \leq \frac{NL \times S_{alt}}{A_{dd}} \leq 0.59$$, in which NL is a mass ratio of the lithium cobalt nickel manganese oxide to the lithium phosphate positive electrode material, $S_{alt}$ is a value of a sum of molar concentrations of the lithium hexafluorophosphate and the lithium bisfluorosulfonylimide in the electrolyte in mol/L, and $A_{dd}$ is a mass ratio of the positive electrode film forming agent to the negative electrode film forming agent.

In the present disclosure, by controlling the relationship among the mass ratio of the lithium phosphate positive electrode material to the lithium cobalt nickel manganese oxide, the sum of molar concentrations of the lithium hexafluorophosphate and the lithium bisfluorosulfonylimide in the electrolyte, and the mass ratio of the positive electrode film forming agent to the negative electrode film forming agent in the lithium-ion battery, in a case that the ternary materials are doped in lithium manganese iron phosphate or lithium iron phosphate, according to the blending ratio of the two materials, the ratio of the positive electrode film forming agent and the negative electrode film forming agent and the ratio of high lithium salt with high heat resistance can be adjusted, thereby improving the cycle performance of the battery while improving the rate performance and energy density of the battery. The higher the blending ratio of lithium cobalt nickel manganese oxide in the positive electrode sheet, that is, the larger the NL, the less the negative electrode film forming agent can be used and the more the positive electrode film forming agent can be used, that is, $A_{dd}$ can be increased, thereby solving the problem that the thermal stability of the NCM is worse than that of the lithium phosphate positive electrode material. At the same time, the concentration of the lithium salt can be reduced. High-concentration lithium salt is more likely to cause thermal runaway than low-concentration lithium salt.

The sum of molar concentrations of the lithium hexafluorophosphate and the lithium bisfluorosulfonylimide in the electrolyte refers to the sum of molar concentrations of the lithium hexafluorophosphate and the lithium bisfluorosulfonylimide in the electrolyte before the formation process when injecting the electrolyte. The mass ratio of the positive electrode film forming agent to the negative electrode film forming agent refers to the mass ratio of the positive electrode film forming agent to the negative electrode film forming agent in the electrolyte before the formation process when injecting the electrolyte. $0.1 \leq \dfrac{NL \times S_{alt}}{A_{dd}} \leq 0.59$, in which $\dfrac{NL \times S_{alt}}{A_{dd}}$ may be 0.1, 0.15, 0.2, 0.25, 0.3, 0.35, 0.4, 0.45, 0.5, 0.55, 0.59, or the like.

In some embodiments, the lithium-ion battery satisfies a formula as follows: $0.1 \leq \dfrac{NL \times S_{alt}}{A_{dd}} \leq 0.57$, in

which $\dfrac{NL \times S_{alt}}{A_{dd}}$ may be 0.1, 0.15, 0.2, 0.25, 0.3, 0.35, 0.4, 0.45, 0.5, 0.55, 0.57, or the like.

In some embodiments, the lithium phosphate positive electrode material includes one or more of lithium manganese iron phosphate and lithium iron phosphate.

In some embodiments, NL ranges from 0.05 to 0.43, for example, it may be 0.05, 0.1, 0.15, 0.2, 0.25, 0.3, 0.35, 0.4, 0.43, etc. In this way, the energy density and the rate performance of the battery can be improved while ensuring the safety and long cycle performance of the battery. Lithium cobalt nickel manganese oxide (NCM) is added to the lithium manganese iron phosphate and/or the lithium iron phosphate. If too much NCM is added, it may affect the safety performance of the battery. If less NCM is added, the energy density and the rate performance of the battery will increase less.

In some embodiments, NL ranges from 0.1 to 0.3, for example, it may be 0.1, 0.12, 0.15, 0.17, 0.2, 0.22, 0.25, 0.27, 0.3, etc.

In some embodiments, a relationship between NL and $A_{dd}$ satisfies a formula as follows: $A_{dd} = a \cdot NL - 0.588$, in which a ranges from 7.1 to 13.8, for example, it may be 7.1, 7.5, 8.0, 8.5, 9.0, 9.5, 10.0, 10.5, 11.0, 11.5, 12.0, 12.5, 13.0, 13.5, 13.8, etc. In this way, when the NL is larger, that is, the content of lithium cobalt nickel manganese oxide (NCM) in the positive electrode sheet is larger, the content of lithium manganese iron phosphate and/or lithium iron phosphate is less, and the corresponding $A_{dd}$ is larger, that is, the more the positive electrode film forming agent is added, and the less the negative electrode film forming agent is added in the electrolyte, so that the addition amount of the positive electrode film forming agent can be increased with the increase of the content of lithium cobalt nickel manganese oxide (NCM), and the addition amount of the negative electrode film forming agent decreases with the decrease of the content of lithium manganese iron phosphate and/or lithium iron phosphate, thereby strengthening the protection of the positive electrode and controlling the film thickness of the negative electrode to control the battery impedance. If the content of lithium manganese iron phosphate and/or lithium iron phosphate is reduced, but the amount of the negative electrode film forming agent is not reduced, the negative electrode film forming agent will be redundant, resulting in thicker film in the negative electrode, and increased impedance.

In some embodiments, a ranges from 7.35 to 8.66, for example, it can be 7.4, 7.5, 7.6, 7.7, 7.8, 7.9, 8.0, 8.1, 8.2, 8.3, 8.4, 8.5, 8.6, etc.

In some embodiments, $A_{dd}$ ranges from 0.1 to 3.1, for example, it may be 0.1, 0.5, 1.0, 1.5, 2.0, 2.5, 3.0, 3.1, etc. In this way, both the positive electrode and the negative electrode can be protected. If $A_{dd}$ is too small, the protection effect on the positive electrode will be insufficient. If $A_{dd}$ is too large, the protection effect on the negative electrode will be insufficient. Unstable film formation of the positive and negative electrodes will deteriorate the cycle performance of the battery.

In some embodiments, $A_{dd}$ ranges from 0.3 to 2.0, for example, it may be 0.3, 0.5, 0.7, 1.0, 1.2, 1.5, 1.7, 2.0, etc.

In some embodiments, the mass percentage of the positive electrode film forming agent in the electrolyte ranges from 0.2% to 2.5%, for example, it may be 0.2%, 0.5%, 0.7%, 1%, 1.2%, 1.5%, 1.7%, 2%, 2.2%, 2.5%, etc. In this way, the positive electrode can be fully protected.

In some embodiments, the mass percentage of the positive electrode film forming agent in the electrolyte ranges from 0.5% to 2.0%, for example, it may be 0.5%, 0.7%, 0.8%, 1%, 1.2%, 1.5%, 1.8%, 2.0%, etc. In this way, the positive electrode can be fully protected.

In some embodiments, the mass percentage of the negative electrode film forming agent in the electrolyte ranges from 0.8% to 2.0%, for example, it may be 0.8%, 0.9%, 1.0%, 1.1%, 1.2%, 1.3%, 1.4%, 1.5%, 1.6%, 1.7%, 1.8%, 1.9%, 2.0%, etc. In this way, the negative electrode can be fully protected.

In some embodiments, the mass percentage of the negative electrode film forming agent in the electrolyte ranges from 1.0% to 1.8%, for example, it may be 1.0%, 1.1%, 1.2%, 1.3%, 1.4%, 1.5%, 1.6%, 1.7%, 1.8%, etc.

In some embodiments, the positive electrode film forming agent includes one or more of 1,3-propanesultone (PS), lithium difluoro(oxalato)borate (LiDFOB), lithium bis(oxalate)borate (LiBOB), tris(trimethylsilyl) phosphite (TMSP), methylene methanedisulfonate (MMDS), tris(trimethylsilyl) borate (TMSB), and 1,3,6-hexanetricarbonitrile (HTCN). Thus, a cathode electrolyte interphase (CEI) film can be effectively formed on the surface of the positive electrode sheet to cover the active sites, reduce the contact between the electrolyte and the electrodes, reduce the decomposition of the electrolyte and the positive electrode materials in the high potential area, maintain the stability of the positive electrode materials, and improve the battery capacity and cycle performance.

In some embodiments, the negative electrode film forming agent includes one or more of vinylene carbonate (VC), fluoroethylene carbonate (FEC), lithium difluorophosphate (LiPO$_2$F$_2$), lithium Tetrafluoroborate (LiBF$_4$), and ethylene sulfate (DTD). In this way, a stable solid electrolyte interface (SEI) film can be formed on the surface of the negative electrode sheet, so that it has good electronic insulation and allows only lithium ions to pass through, thereby preventing further reaction between the electrolyte and the electrode materials, thereby protecting the electrode materials, prolonging the cycle life of the battery, and improving the safety of the battery.

In some embodiments, a relationship between NL and $S_{alt}$ satisfies a formula as follows: $S_{alt}$ = b·NL+1.124, in which b ranges from -0.750 to -0.456, for example, it may be - 0.456, -0.500, -0.550, -0.600, -0.650, -0.700, -0.750, etc. In this way, when the NL is larger, that is, the content of lithium cobalt nickel manganese oxide (NCM) in the positive electrode sheet is larger, the content of lithium manganese iron phosphate and/or lithium iron phosphate is less, and the corresponding $S_{alt}$ is larger, that is, the total concentration of lithium salt is less, which can improve the thermal stability of the battery and thus improving the battery safety. The thermal runaway of the high concentration lithium salt will reduce the temperature of the battery, so it is necessary to control the concentration of the lithium salt.

In some embodiments, b ranges from -0.639 to -0.690, for example, it may be -0.639, -0.640, -0.640, -0.650, -0.660, -0.670, -0.680, -0.690, etc.

In some embodiments, $S_{alt}$ ranges from 0.85 to 1.10, for example, it may be 0.85, 0.87, 0.90, 0.92, 0.95, 0.97, 1.00, 1.02, 1.05, 1.07, 1.10, etc. In this way, the concentration of the lithium salt in the electrolyte can be controlled, thereby reducing the probability of thermal runaway caused by high concentration of lithium salt and improving the battery safety.

In some embodiments, $S_{alt}$ ranges from 0.90 to 1.05, for example, it may be 0.90, 0.91, 0.92, 0.93, 0.94, 0.95, 0.96, 0.97, 0.98, 0.99, 1.00, 1.01, 1.02, 1.03, 1.04, 1.05, etc.

In some embodiments, a ratio of the molar concentration of lithium hexafluorophosphate to lithium bisfluorosulfonylimide in the electrolyte decreases with the increase of NL. In this way, when NL is larger, that is, the content of lithium cobalt nickel manganese oxide (NCM) in the positive electrode sheet is larger, the content of lithium manganese iron phosphate and/or lithium iron phosphate is less, the proportion of LiFSI in the lithium salt is increased, and the proportion of LiPF$_6$ is decreased, so that the thermal stability of the battery can be improved, thereby improving the battery safety. With the increase of the addition amount of NCM in the battery, the thermal stability of the battery decreases, the thermal stability of LiFSI is better than that of LiPF$_6$, therefore, the thermal stability of the battery can be improved by increasing the proportion of LiFSI.

In some embodiments, the ratio of the molar concentration of lithium hexafluorophosphate to lithium bisfluorosulfonylimide in the electrolyte ranges from 0.7 to 3.4, for example, it may be 0.7, 1.0, 1.2, 1.5, 1.7, 2.0, 2.2, 2.5, 2.7, 3.0, 3.4, etc.

In some embodiments, the ratio of the molar concentration of lithium hexafluorophosphate to lithium bisfluorosulfonylimide in the electrolyte ranges from 1.0 to 2.5, for example, it may be 1.0, 1.1, 1.2, 1.3, 1.4, 1.5, 1.6, 1.7, 1.8, 1.9, 2.0, 2.1, 2.2, 2.3, 2.4, 2.5, etc.

In some embodiments, the concentration of lithium hexafluorophosphate in the electrolyte ranges from 0.35 mol/L to 0.85 mol/L, for example, it may be 0.35 mol/L, 0.45 mol/L, 0.55 mol/L, 0.65 mol/L, 0.75 mol/L, 0.85 mol/L, etc. In this way, $LiPF_6$ can be used to passivate the aluminum foil, so as to reduce the corrosion of LiFSI to the aluminum foil, and at the same time the probability of hydrolysis of $LiPF_6$ to generate HF is reduced, thereby improving the stability of the battery.

In some embodiments, the concentration of lithium hexafluorophosphate in the electrolyte ranges from 0.45 mol/L to 0.75 mol/L, for example, it may be 0.45 mol/L, 0.50 mol/L, 0.55 mol/L, 0.60 mol/L, 0.65 mol/L, 0.70 mol/L, 0.75 mol/L, etc.

In some embodiments, the concentration of the lithium bisfluorosulfonylimide in the electrolyte ranges from 0.25 mol/L to 0.50 mol/L, for example, it may be 0.25 mol/L, 0.3 mol/L, 0.35 mol/L, 0.4 mol/L, 0.45 mol/L, 0.5 mol/L, etc. In this way, the corrosion of LiFSI to aluminum foil can be controlled, the cycle performance of the battery can be improved, and the stability and conductivity of the electrolyte can be improved.

In some embodiments, the concentration of lithium bisfluorosulfonylimide in the electrolyte ranges from 0.30 mol/L to 0.45 mol/L, for example, it may be 0.30 mol/L, 0.31 mol/L, 0.32 mol/L, 0.33 mol/L, 0.34 mol/L, 0.35 mol/L, 0.36 mol/L, 0.37 mol/L, 0.38 mol/L, 0.39 mol/L, 0.40 mol/L, 0.41 mol/L, 0.42 mol/L, 0.43 mol/L, 0.44 mol/L, 0.45 mol/L, etc.

In some embodiments, the single-sided surface density of the positive electrode sheet ranges from 200 $g/m^2$ to 260 $g/m^2$, for example, it may be 200 $g/m^2$, 210 $g/m^2$, 220 $g/m^2$, 230 $g/m^2$, 240 $g/m^2$, 250 $g/m^2$, 260 $g/m^2$, etc. In this way, it is possible to make the battery have a high energy density, but too high area density will affect the transmission of lithium ions, increase the battery impedance, and deteriorate the cycle performance of the battery.

In some embodiments, the single-sided surface density of the positive electrode sheet ranges from 210 $g/m^2$ to 250 $g/m^2$, for example, it may be 210 $g/m^2$, 220 $g/m^2$, 230 $g/m^2$, 240 $g/m^2$, 250 $g/m^2$, etc.

In some embodiments, the compacted density of the positive electrode sheet ranges from 2.0 $g/cm^3$ to 2.6 $g/cm^3$, for example, it may be 2.0 $g/cm^3$, 2.1 $g/cm^3$, 2.2 $g/cm^3$, 2.3 $g/cm^3$, 2.4 $g/cm^3$, 2.5 $g/cm^3$, 2.6 $g/cm^3$, etc. In this way, it is possible to make the battery have a high energy density, but too high compaction will crush the particles and destroy the effectiveness of the active materials.

In some embodiments, the compacted density of the positive electrode sheet ranges from 2.1 $g/cm^3$ to 2.5 $g/cm^3$, for example, it may be 2.1 $g/cm^3$, 2.2 $g/cm^3$, 2.3 $g/cm^3$, 2.4 $g/cm^3$, 2.5 $g/cm^3$, etc.

In some embodiments, an electrolyte injection coefficient of the lithium-ion battery ranges from 3.0 g/Ah to 5.0 g/Ah, for example, it may be 3.0 g/Ah, 3.2 g/Ah, 3.5 g/Ah, 3.8 g/Ah, 4.0 g/Ah, 4.2 g/Ah, 4.5 g/Ah, 4.8 g/Ah, 5.0 g/Ah, etc. Thus, the battery performance can be improved. However, too much electrolyte will lead to an increase in side reactions, and increase cost of the battery; too little electrolyte will lead to insufficient electrode infiltration, increased interface impedance, and deterioration of battery cycle performance.

In some embodiments, an electrolyte injection coefficient of the lithium-ion battery ranges from 3.5 g/Ah to 4.5 g/Ah, for example, it may be 3.5 g/Ah, 3.6 g/Ah, 3.7 g/Ah, 3.8 g/Ah, 3.9 g/Ah, 4.0 g/Ah, 4.1 g/Ah, 4.2 g/Ah, 4.3 g/Ah, 4.4 g/Ah, 4.5 g/Ah, etc.

In some embodiments, the lithium-ion battery further includes a negative electrode sheet, and the active materials of the negative electrode sheet include graphite. In this way, the battery performance can be improved. Graphite has low cost, high specific energy, good chemical stability, and long cycle life.

In some embodiments, the single-sided surface density of the negative electrode sheet ranges from 80 $g/m^2$ to 110 $g/m^2$, for example, it may be 80 $g/m^2$, 90 $g/m^2$, 100 $g/m^2$, 110 $g/m^2$, etc. In this way, the battery may have a high energy density, but too high single-sided surface density can affect the transmission of lithium ions, increase the battery impedance, and deteriorate the cycle performance of the battery.

In some embodiments, the compacted density of the negative electrode sheet ranges from 1.55 $g/cm^3$ to 1.75 $g/cm^3$, for example, it may be 1.55 $g/cm^3$, 1.57 $g/cm^3$, 1.6 $g/cm^3$, 1.62 $g/cm^3$, 1.65 $g/cm^3$, 1.67 $g/cm^3$, 1.7 $g/cm^3$, 1.72 $g/cm^3$, 1.75 $g/cm^3$, etc. In this way, the battery can have a high energy density, but too high compaction will crush the particles and destroy the effectiveness of the active materials.

Embodiments of the present disclosure further provide an electrical device, and the electrical device includes the above-mentioned lithium-ion batteries.

Example 1

A lithium-ion battery (a soft-pack battery with a model number of 505070), in which active materials in a positive electrode sheet are lithium manganese iron phosphate and lithium cobalt nickel manganese oxide (NCM), and the mass ratio (NL) of the lithium cobalt nickel manganese oxide to the lithium manganese iron phosphate is 0.25%; the positive electrode film forming agent is methylene methanedisulfonate (MMDS), and the mass percentage of which in an electrolyte before the formation process when injecting the electrolyte is 1.5%; the negative electrode film forming agent is vinylene carbonate (VC), and the mass percentage of which in an electrolyte the formation process when injecting the electrolyte is 1.2%; the concentration of lithium hexafluorophosphate ($LiPF_6$) in the electrolyte is 0.55 mol/L; and the concentration of lithium bisfluorosulfonylimide (LiFSI) in the electrolyte is 0.4 mol/L.

Example 2

This example is basically the same as Example 1, and the only difference lies in that, in this example, the mass ratio (NL) of the lithium cobalt nickel manganese oxide to the lithium manganese iron phosphate is 0.17%, the mass percentage of the positive electrode film forming agent is 1.0%, the mass percentage of the negative electrode film forming agent is 1.5%, the concentration of lithium hexafluorophosphate ($LiPF_6$) is 0.65 mol/L, and the concentration of lithium bisfluorosulfonylimide (LiFSI) is 0.35 mol/L.

Example 3

This example is basically the same as Example 1, and the only difference lies in that, in this example, the mass ratio (NL) of the lithium cobalt nickel manganese oxide to the lithium manganese iron phosphate is 0.14%, the mass percentage of the positive electrode film forming agent is 0.75%, the mass percentage of the negative electrode film forming agent is 1.65%, the concentration of lithium hexafluorophosphate ($LiPF_6$) is 0.7 mol/L, and the concentration of lithium difluorosulfonimide (LiFSI) is 0.32 mol/L.

Example 4

This example is basically the same as Example 1, and the only difference lies in that, in this example, the mass ratio (NL) of the lithium cobalt nickel manganese oxide to the lithium manganese iron phosphate is 0.05%, the mass percentage of the positive electrode film forming agent is 0.2%, the mass percentage of the negative electrode film forming agent is 2%, the concentration of lithium hexafluorophosphate ($LiPF_6$) is 0.85 mol/L, and the concentration of lithium difluorosulfonimide (LiFSI) is 0.25 mol/L.

Example 5

This example is basically the same as Example 1, and the only difference lies in that, in this example, the mass ratio (NL) of the lithium cobalt nickel manganese oxide to the lithium manganese iron phosphate is 0.43%, the mass percentage of the positive electrode film forming agent is 2.5%, the mass percentage of the negative electrode film forming agent is 0.8%, the concentration of lithium hexafluorophosphate ($LiPF_6$) is 0.35 mol/L, and the concentration of lithium difluorosulfonimide (LiFSI) is 0.5 mol/L.

Example 6

This example is basically the same as Example 1, and the only difference lies in that, in this example, the mass ratio (NL) of the lithium cobalt nickel manganese oxide to the lithium manganese iron phosphate is 0.1%, the mass percentage of the positive electrode film forming agent is 0.5%, the mass percentage of the negative electrode film forming agent is 1.8%, the concentration of lithium hexafluorophosphate ($LiPF_6$) is 0.75 mol/L, and the concentration of lithium difluorosulfonimide (LiFSI) is 0.3 mol/L.

Example 7

This example is basically the same as Example 1, and the only difference lies in that, in this example, the mass ratio (NL) of the lithium cobalt nickel manganese oxide to the lithium manganese iron phosphate is 0.3%, the mass percentage content of the positive electrode film forming agent is 2%, the mass percentage of the negative electrode film forming agent is 1%, the concentration of lithium hexafluorophosphate ($LiPF_6$) is 0.45 mol/L, and the concentration of lithium difluorosulfonimide (LiFSI) is 0.45 mol/L.

Example 8

This example is basically the same as Example 1, and the only difference lies in that, in this example, the mass ratio (NL) of the lithium cobalt nickel manganese oxide to the lithium manganese iron phosphate is 0.13%, the mass percentage content of the positive electrode film forming agent is 0.7%, the mass percentage of the negative electrode film forming agent is 1.8%, the concentration of lithium hexafluorophosphate ($LiPF_6$) is 0.73 mol/L, and the concentration of lithium difluorosulfonimide (LiFSI) is 0.3 mol/L.

Example 9

This example is basically the same as Example 1, and the only difference lies in that, in this example, the concentration of lithium hexafluorophosphate ($LiPF_6$) is 0.7 mol/L and the concentration of lithium difluorosulfonimide (LiFSI) is 0.5 mol/L.

Example 10

This example is basically the same as Example 1, and the only difference lies in that, in this example, the concentration of lithium hexafluorophosphate ($LiPF_6$) is 0.9 mol/L and the concentration of lithium difluorosulfonimide (LiFSI) is 0.05 mol/L.

Comparative Example 1

This comparative example is basically the same as Example 1, and the only difference lies in that the mass percentage of the positive electrode film forming agent in this comparative example is 0.3%.

Comparative Example 2

This comparative example is basically the same as Example 1, and the only difference lies in that the mass percentage of the negative electrode film forming agent in this comparative example is 0.4%.

Test Examples:

25°C cycle test: the batteries of the Examples and Comparative Examples are subjected to a full charge/-discharge cycle test under 25°C. The test steps are as follows: letting the battery stand for 30 minutes; and charging at a constant current of 0.03 C and a constant voltage of 4.25V until the current reached 0.05 C (C is a design capacity of the battery). The capacity of the last cycle after three cycles is recorded as the rated capacity Q. The battery is left to stand for 1 h, and charged at a constant current of 1Q and a constant voltage of 4.25V until the current reached 0.05 Q. Then the battery is left to stand for 1 h, and discharged at a constant current of 1Q. After 100 cycles, the capacity retention rate is measured. Results are shown in Table 1.
Soft-pack puncture test: the batteries obtained in the Examples and the Comparative examples are fully charged, and a high temperature resistant steel needle (the tip thereof had a cone angle of 48) with a diameter of 7 mm is used to puncture the battery plates at a speed of 25 mm/s in the direction perpendicular to the battery plates. The puncture position should be close to the geometric center of the surface to be punctured, the steel needle stays in the battery, and then observation is made for one hour. The judgment basis is that the batteries does not burn or explode, and none of the batteries mentioned above burns. Therefore, the risk of puncture is judged by the maximum temperature of the large surface after one hour. The test method of the maximum temperature of the large surface is to stick a needle-punched temperature sensing line directly on the large surface shell and record the temperature, and the results are shown in Table 1.

Table 1

| | NL % | $A_{dd}$ % | $S_{alt}$ | $LiPF_6$/ LiFSI | $\dfrac{NL \times S_{alt}}{A_{dd}}$ | a | b | Capacity retention rate% | Shell large surface temperature °C |
|---|---|---|---|---|---|---|---|---|---|
| Example 1 | 0.25 | 1.3 | 0.95 | 1.38 | 0.18 | 7.55 | -0.70 | 90.5 | 23 |
| Example 2 | 0.17 | 0.7 | 1.00 | 1.86 | 0.24 | 7.58 | -0.73 | 90.4 | 24 |
| Example 3 | 0.14 | 0.5 | 1.02 | 2.19 | 0.29 | 7.77 | -0.74 | 90.4 | 23 |
| Example 4 | 0.05 | 0.1 | 1.10 | 3.40 | 0.55 | 13.76 | -0.48 | 90.3 | 23 |
| Example 5 | 0.43 | 3.1 | 0.85 | 0.70 | 0.12 | 8.58 | -0.64 | 90.4 | 23 |
| Example 6 | 0.10 | 0.3 | 1.05 | 2.50 | 0.35 | 8.88 | -0.74 | 90.3 | 24 |
| Example 7 | 0.30 | 2.0 | 0.90 | 1.00 | 0.14 | 8.63 | -0.75 | 90.2 | 25 |
| Example 8 | 0.13 | 0.4 | 1.03 | 2.43 | 0.33 | 7.60 | -0.72 | 90.4 | 24 |

(continued)

|  | NL % | $A_{dd}$ % | $S_{alt}$ | LiPF$_6$/ LiFSI | $\dfrac{NL \times S_{alt}}{A_{dd}}$ | a | b | Capacity retention rate% | Shell large surface temperature °C |
|---|---|---|---|---|---|---|---|---|---|
| Example 9 | 0.25 | 1.3 | 1.20 | 1.40 | 0.23 | 7.55 | 0.30 | 90.0 | 32 |
| Example 10 | 0.25 | 1.3 | 0.95 | 18.00 | 0.18 | 7.55 | -0.70 | 90.1 | 34 |
| Comparative Example 1 | 0.25 | 0.3 | 0.95 | 1.38 | 0.79 | 3.55 | -0.70 | 84.2 | 23 |
| Comparative Example 2 | 0.25 | 3.8 | 0.95 | 1.38 | 0.06 | 17.55 | -0.70 | 85.0 | 24 |

It can be seen from Table 1 that:

Compared with Examples 9 and 10, the batteries obtained in Examples 1 to 8 have a higher capacity retention rate and a lower shell large face temperature. The reason lies in that: for the batteries obtained in Examples 1 to 8, with the increase of the ratio of lithium cobalt nickel manganese oxide (NCM) blended in the lithium manganese iron phosphate, the mass percentage of the positive electrode film forming agent is increased accordingly, and the mass percentage of the negative electrode film forming agent is decreased accordingly, that is, $A_{dd}$ is increased accordingly. Meanwhile, the total concentration of lithium hexafluorophosphate (LiPF$_6$) and lithium bisfluorosulfonylimide is decreased accordingly, that is, $S_{alt}$ is decreased accordingly. Further, the concentration of LiPF$_6$ is decreased accordingly, and the concentration of LiFSI is increased, that is, the ratio of LiPF$_6$/LiFSI is decreased, thereby improving the cycle performance and safety performance of the batteries. In Example 9, the total concentration of lithium hexafluorophosphate (LiPF$_6$) and lithium bisfluorosulfonylimide is relatively high, which results in a small improvement in the cycle performance and safety performance of the battery. In Example 10, the ratio of LiPF$_6$/LiFSI is relatively high, which results in a small improvement in the cycle performance and safety performance of the battery.

Compared with Comparative Example 1, the capacity retention rate of the battery in Example 1 is higher due to the reason that the mass percentage of the positive electrode film forming agent in Comparative Example 1 is small, which makes the value $\dfrac{NL \times S_{alt}}{A_{dd}}$ larger, and the film forming protection effect of the positive electrode film forming agent is poor, thereby deteriorating the cycle performance of the battery.

Compared with Comparative Example 2, the capacity retention rate of the battery in Example 1 is higher due to the reason that the mass percentage of the negative electrode film forming agent in Comparative Example 1 is small, which makes the value $\dfrac{NL \times S_{alt}}{A_{dd}}$ smaller, and the film forming protection effect of the negative electrode film forming agent is poor, thereby deteriorating the cycle performance of the battery.

**Claims**

1. A lithium-ion battery, comprising a positive electrode sheet and an electrolyte, wherein an active material in the positive electrode sheet comprises a lithium phosphate positive electrode material and a lithium cobalt nickel manganese oxide; the electrolyte comprises a positive electrode film forming agent, a negative electrode film forming agent, and a lithium salt, and the lithium salt comprises lithium hexafluorophosphate and lithium bisfluorosulfonylimide; and the lithium-ion battery satisfies a formula as follows:

$$0.1 \leq \frac{NL \times S_{alt}}{A_{dd}} \leq 0.59,$$

wherein NL is a mass ratio of the lithium cobalt nickel manganese oxide to the lithium phosphate positive electrode material, $S_{alt}$ is a value of a sum of a molar concentration of the lithium hexafluorophosphate and a molar concentration of the lithium bisfluorosulfonylimide in the electrolyte in mol/L, and $A_{dd}$ is a mass ratio of the positive electrode film forming agent to the negative electrode film forming agent.

2. The lithium-ion battery according to claim 1, wherein a ratio of the molar concentration of the lithium hexafluorophosphate to the molar concentration of the lithium bisfluorosulfonylimide in the electrolyte decreases with an increase of the NL.

3. The lithium-ion battery according to claim 1, wherein a relationship between the NL and the $A_{dd}$ satisfies a formula as follows: $A_{dd} = a \cdot NL - 0.588$, wherein a ranges from 7.1 to 13.8; and/or
a relationship between the NL and the $S_{alt}$ satisfies a formula as follows: $S_{alt} = b \cdot NL + 1.124$, wherein b ranges from -0.750 to -0.456.

4. The lithium-ion battery according to claim 1, wherein the $A_{dd}$ ranges from 0.1 to 3.1; and/or

   the NL ranges from 0.05 to 0.43; and/or
   the $S_{alt}$ ranges from 0.85 to 1.1.

5. The lithium-ion battery according to claim 1, wherein a ratio of the molar concentration of the lithium hexafluorophosphate to the molar concentration of the lithium bisfluorosulfonylimide in the electrolyte ranges from 0.7 to 3.4; and/or

   a concentration of the lithium hexafluorophosphate in the electrolyte ranges from 0.35 mol/L to 0.85 mol/L; and/or
   a concentration of the lithium bisfluorosulfonylimide in the electrolyte ranges from 0.25 mol/L to 0.50 mol/L.

6. The lithium-ion battery according to claim 1, wherein a mass percentage of the positive electrode film forming agent in the electrolyte ranges from 0.2% to 2.5%; and/or
a mass percentage of the negative electrode film forming agent in the electrolyte ranges from 0.8% to 2.0%.

7. The lithium-ion battery according to claim 1, wherein the lithium phosphate positive electrode material comprises one or more of lithium manganese iron phosphate and lithium iron phosphate; and/or

   the positive electrode film forming agent comprises one or more of 1,3-propanesultone, lithium difluoro(oxalato)borate, lithium bis(oxalate)borate, tris(trimethylsilyl) phosphite, methylene methanedisulfonate, tris(trimethylsilyl) borate, or 1,3,6-hexanetricarbonitrile; and/or
   the negative electrode film forming agent comprises one or more of vinylene carbonate, fluoroethylene carbonate, lithium difluorophosphate, lithium tetrafluoroborate, or ethylene sulfate.

8. The lithium-ion battery according to claim 1, wherein a single-sided surface density of the positive electrode sheet ranges from 200 g/m$^2$ to 260 g/m$^2$; and/or

   a compacted density of the positive electrode sheet ranges from 2.0 g/cm$^3$ to 2.6 g/cm$^3$; and/or
   an electrolyte injection coefficient of the lithium-ion battery ranges from 3.0 g/Ah to 5.0 g/Ah.

9. The lithium-ion battery according to claim 1, further comprising a negative electrode sheet, an active material of the negative electrode sheet comprises graphite; and a single-sided surface density of the negative electrode sheet ranges from 80 g/m$^2$ to 110 g/m$^2$; and/or
a compacted density of the negative electrode sheet ranges from 1.55 g/cm$^3$ to 1.75 g/cm$^3$.

10. An electrical device comprising the lithium-ion battery according to any one of claims 1 to 9.

**EP 4 776 373 A1**

**INTERNATIONAL SEARCH REPORT**

| International application No. |
| --- |
| **PCT/CN2025/074735** |

| **A.** | **CLASSIFICATION OF SUBJECT MATTER** |
| --- | --- |

H01M 10/0568(2010.01)i; H01M 10/0567(2010.01)i; H01M 10/0525(2010.01)i; H01M 4/136(2010.01)i

According to International Patent Classification (IPC) or to both national classification and IPC

| **B.** | **FIELDS SEARCHED** |
| --- | --- |

Minimum documentation searched (classification system followed by classification symbols)

IPC:H01M10/-,H01M4/-

Documentation searched other than minimum documentation to the extent that such documents are included in the fields searched

Electronic data base consulted during the international search (name of data base and, where practicable, search terms used)

CNTXT, ENTXTC, CNKI, VEN: 电池, 电极, 电解液, 活性, 磷酸?锂, 磷酸铁锂, 六氟磷酸锂, 镍钴锰酸锂, 双氟磺酰亚胺锂, 氧化镍钴锰锂, 活性物质, 活性材料, 正极, LiFePO4, LiFSI, LiNixCoyMnzO2, LiPF6, NCM, battery, cell, anode, active material, phosphate lithium, nickel cobalt manganese, lithium hexafluorophosphate, lithium bis-fluorosulfonimide, lithium iron phosphate

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | CN 116632349 A (AESC TECHNOLOGY (JIANGSU) CO., LTD. et al.) 22 August 2023 (2023-08-22)<br>embodiment 1 | 1-10 |
| A | CN 118281343 A (GUANGZHOU TINCI MATERIALS TECHNOLOGY CO., LTD.) 02 July 2024 (2024-07-02)<br>embodiment 1 | 1-10 |
| A | CN 117878384 A (CONTEMPORARY AMPEREX TECHNOLOGY CO., LTD.) 12 April 2024 (2024-04-12)<br>embodiment 1, and tables 1-2 | 1-10 |
| A | CN 118676375 A (TRINA ENERGY STORAGE SOLUTIONS (JIANGSU) CO., LTD.) 20 September 2024 (2024-09-20)<br>entire description | 1-10 |
| A | KR 20230163932 A (LG CHEMICAL LTD.) 01 December 2023 (2023-12-01)<br>entire description | 1-10 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 July 2025** | **17 July 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2025/074735**

| Patent document cited in search report | | | Publication date (day/month/year) | Patent family member(s) | | | Publication date (day/month/year) |
|---|---|---|---|---|---|---|---|
| CN | 116632349 | A | 22 August 2023 | None | | | |
| CN | 118281343 | A | 02 July 2024 | None | | | |
| CN | 117878384 | A | 12 April 2024 | None | | | |
| CN | 118676375 | A | 20 September 2024 | None | | | |
| KR | 20230163932 | A | 01 December 2023 | WO | 2023229300 | A1 | 30 November 2023 |
| | | | | CN | 117616593 | A | 27 February 2024 |
| | | | | EP | 4354535 | A1 | 17 April 2024 |
| | | | | JP | 2024525013 | A | 09 July 2024 |
| | | | | US | 2024322258 | A1 | 26 September 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411629583